# EUROPÄISCHE PATENTSCHRIFT

(11) **EP 0 608 760 B1**
(45) Veröffentlichungstag und Bekanntmachung des Hinweises auf die Patenterteilung: **15.09.2004**
(21) Anmeldenummer: 94100710.6
(22) Anmeldetag: 19.01.1994
(51) Int. Cl.: C08K 7/02, C08L 45/00, C08F 232/08

(54) **Faserverstärktes Cycloolefincopolymer-Material, Verfahren zu seiner Herstellung und Formkörper aus dem Material**
Fiber-reinforced cyclo-olefin copolymer material, process for its production and articles made from that material
Matériau de copolymère de cyclo-oléfine, procédé pour sa fabrication et articles formés à partir de se matériau

(30) Priorität: 29.01.1993 DE 4302569
(43) Veröffentlichungstag der Anmeldung: 03.08.1994
(73) Patentinhaber: Ticona GmbH, 65451 Kelsterbach (DE)
(72) Erfinder: Brekner, Michael-Joachim, Dr., D-60529 Frankfurt (DE); Land, Horst-Tore, Dr., D-65719 Hofheim (DE); Osan, Frank, Dr., D-65779 Kelkheim (DE)

(56) Entgegenhaltungen:
- EP-A- 0 451 858
- EP-A- 0 503 422
- FR-A- 2 407 951

## Beschreibung

Die vorliegende Erfindung betrifft "chemisch einheitliche" Cycloolefincopolymere, die als Monomere mindestens ein Polycycloolefin, wie z.B. Norbornen, sowie mindestens ein Monocycloolefin und/oder ein acyclisches Olefin enthalten, und durch Fasern, insbesondere Glasfasern, verstärkt sind.

Cycloolefincopolymere sind eine Polymerklasse mit herausragendem Eigenschaftsniveau. Sie zeichnen sich u.a. durch hohe Wärmeformbeständigkeit, hydrolytische Stabilität, geringe Wasseraufnahme, Witterungsbeständigkeit und hohe Steifigkeit aus.

Es ist bekannt, daß Cycloolefine mittels verschiedener Katalysatoren polymerisiert werden können. Dabei verläuft die Polymerisation in Abhängigkeit vom Katalysator über Ringeröffnung (US 3 557 072) oder unter Öffnung der Doppelbindung (EP 156464, US 5.087.677).

Bekannt ist, daß in Cycloolefincopolymere Verstärkungsstoffe eingearbeitet werden können. So wird in JP 3207739, DD 203059 sowie in EP 451858 über Thermoplast-Kombinationen berichtet, die aus statistischen Polymerisaten von Cycloolefinen und Ethylen oder Polycycloolefinen und Ethylen bestehen. Derartige Thermoplast-Kombinationen zeichen sich beispielsweise durch eine besonders hohe Steifigkeit aus. Diese Materialien weisen jedoch den entscheidenden Nachteil auf, daß sie auf Grund ihres amorphen Charakters mindestens 170 °C oberhalb der Glastemperatur verarbeitet werden müssen. Da die thermische Stabilität der Cycloolefinpolymeren nur bis 350 °C gewährleistet ist, können mit den in JP 3207739, DD 203059 und in EP 451858 beschriebenen Mischungen nur Wärmeformbeständigkeiten bis maximal 180 °C eingestellt werden.

Ziel der Entwicklung bei polymeren Werkstoffen ist es stets, eine maximale Wärmeformbeständigkeit einzustellen. Es bestand daher die Aufgabe, faserverstärkte Materialien auf der Basis von Cycloolefinpolymeren anzugeben, die eine Wärmeformbeständigkeit von mindestens 180 °C und eine gute thermoplastische Verarbeitbarkeit aufweisen. Die vorliegende Erfindung löst diese Aufgabe.

Es wurde nun ein faserverstärktes Cycloolefincopolymer-Material gefunden, das aus 1 bis 99 Gew.-% Verstärkungsfasern und 99 - 1 Gew.-% mindestens eines Cycloolefincopolymeren besteht, welches aus mindestens einem Polycycloolefin der allgemeinen Formel I bis VI 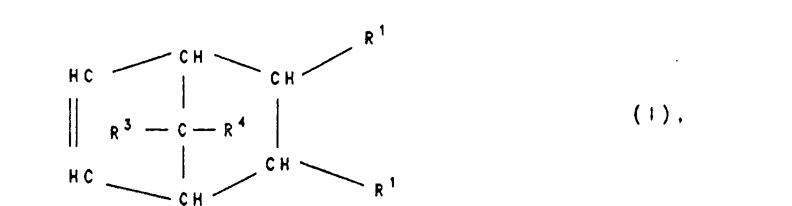 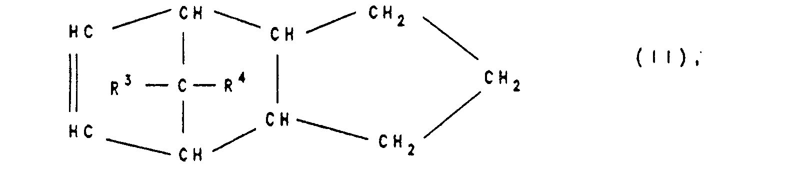 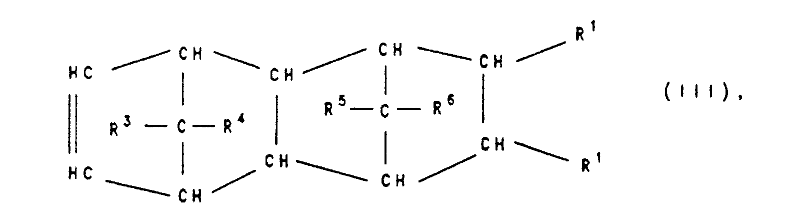 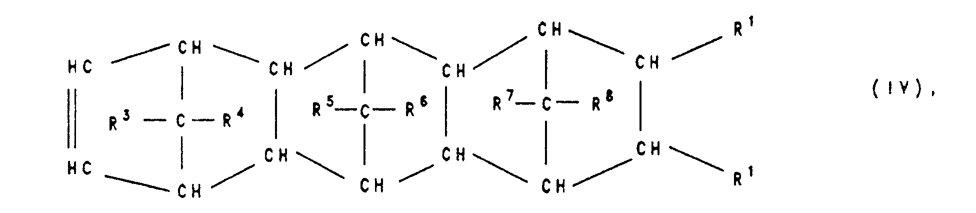 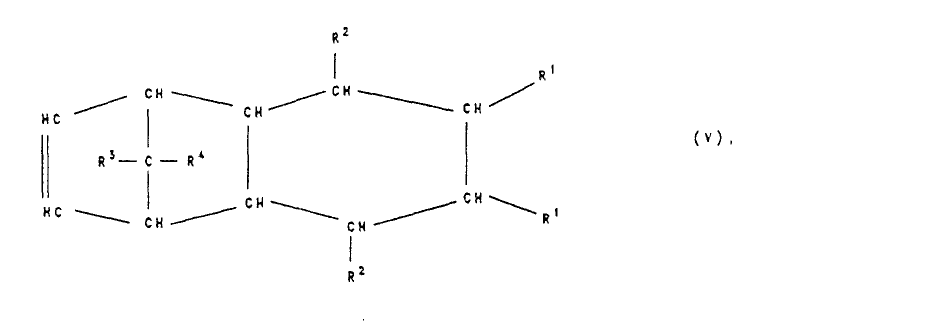 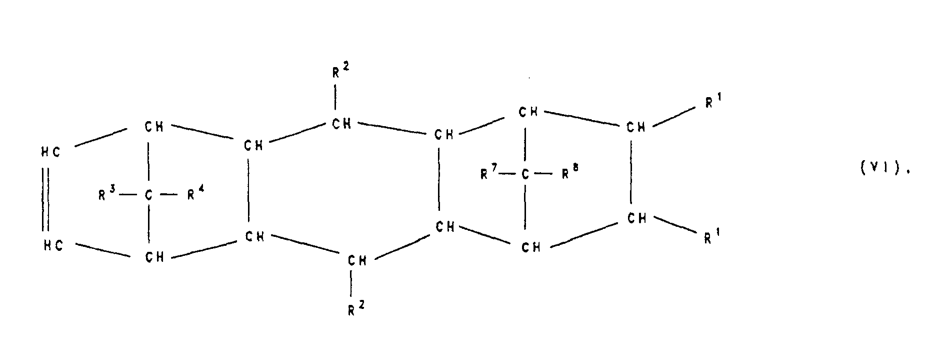 worin R¹, R², R³, R⁴, R⁵, R⁶, R⁷ und R⁸ gleich oder verschieden sind und ein Wasserstoffatom, einen C₆-C₁₆-Aryl- oder einen C₁-C₈-Alkylrest bedeuten, und mindestens einem Olefin, das ausgewählt wird aus der Gruppe der Monocycloolefine der Formel VII 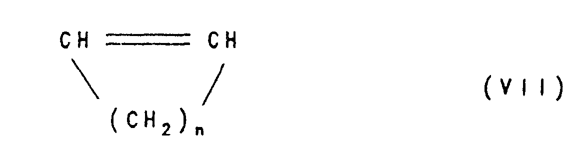 worin n eine Zahl von 2 bis 10 ist,
und/oder der Gruppe der acyclischen Olefine der Formel VIII 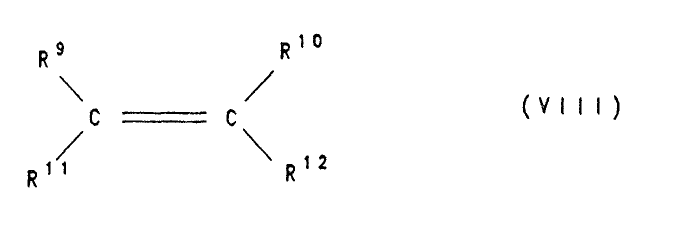 worin R⁹, R¹⁰, R¹¹ und R¹² gleich oder verschieden sind und ein Wasserstoffatom oder einen C₁-C₈-Alkylrest bedeuten, aufgebaut ist. Das Cycloolefinpolymer-Material ist dadurch gekennzeichnet, daß die Polycycloolefine der allgemeinen Formel I bis VI, die Monocycloolefine der allgemeinen Formel VII und/oder die acyclischen Olefine der allgemeinen Formel VIII im Polymermolekül nicht statistisch verteilt sind, sondern zwei Polycycloolefin-Einheiten nicht unmittelbar benachbart, sondern jeweils durch mindestens eine Einheit VII und/oder VIII getrennt sind. Das Monomer VIII soll vorzugsweise immer, das Monomer VII kann zusätzlich vorhanden sein.

Vorzugsweise ist zwischen zwei Polycycloolefin-Einheiten jeweils nur eine Einheit VII oder VIII, insbesondere ausschließlich VIII angeordnet. Polymere mit der oben beschriebenen regelmäßigen Anordnung der Monomere werden nachfolgend "chemisch einheitlich" genannt, wobei dieser Begriff hier zum Teil enger gebraucht wird als in EP 0 503 422.

Falls das faserverstärkte Cycloolefincopolymer-Material aus mehreren Cycloolefincopolymeren besteht, so ist jedes der Copolymere "chemisch einheitlich". Die Herstellung von chemisch einheitlichen Cycloolefincopolymeren ist in der europäischen Patentanmeldung EP 0 503 422 beschrieben, auf die hier ausdrücklich Bezug genommen wird.

Die Herstellung eines "chemisch einheitlichen" Cycloolefincopolymers erfolgt gemäß EP 0 503 422 durch Polymerisation von 0,1 bis 99,9 Gew.-%, bezogen auf die Gesamtmenge der Monomeren, mindestens eines Monomers der Formeln I, II, III, IV, V oder VI 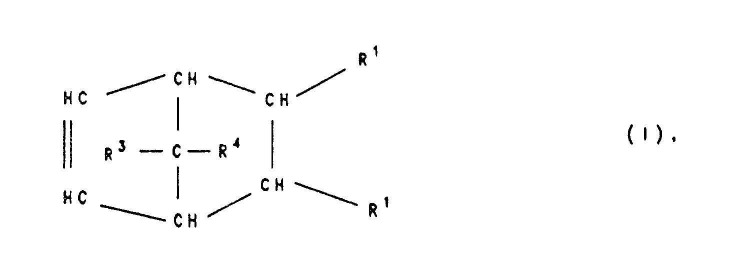 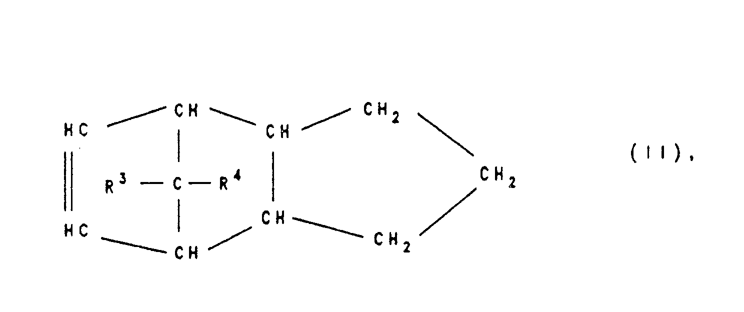 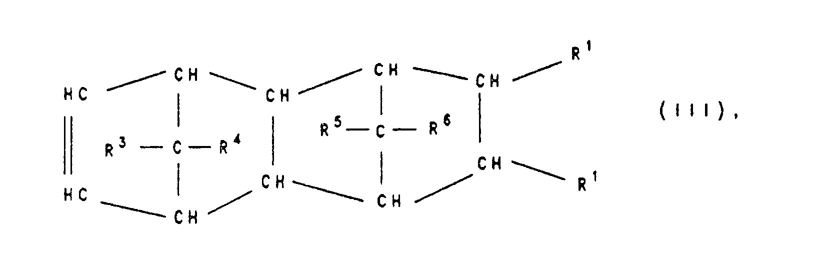 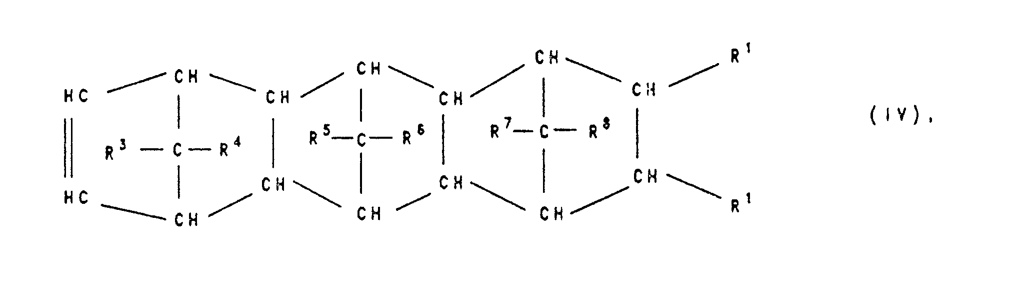 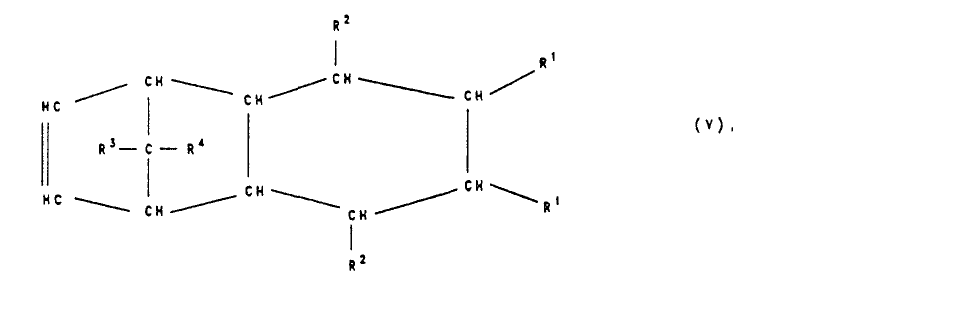 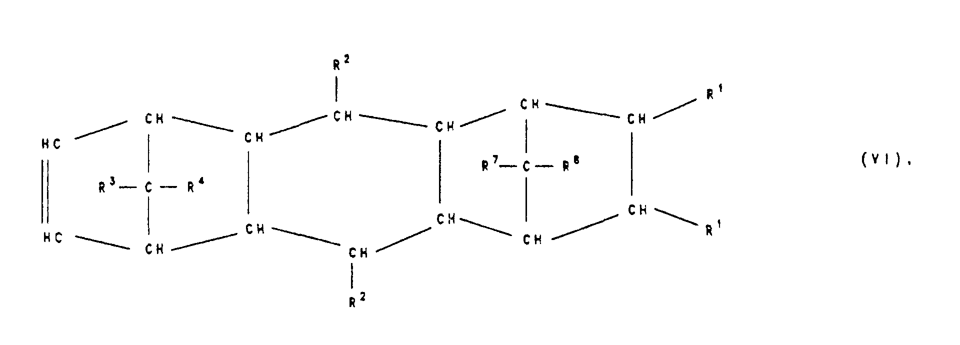 worin R¹, R², R³, R⁴, R⁵, R⁶, R⁷ und R⁸ gleich oder verschieden sind und ein Wasserstoffatom, einen C₆-C₁₆-Aryl- oder einen C₁-C₈-Alkylrest bedeuten, wobei gleiche Reste in den verschiedenen Formeln eine unterschiedliche Bedeutung haben können,
0 bis 99,9 Gew.-%, bezogen auf die Gesamtmenge der Monomeren, eines Cycloolefins der Formel VII 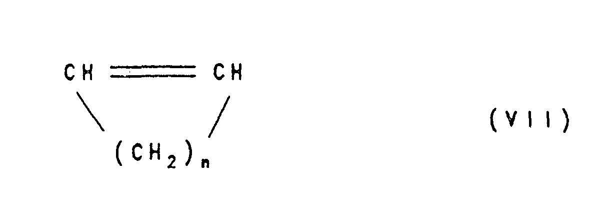 worin n eine Zahl von 2 bis 10 ist, und
0 bis 99,9 Gew.-%, bezogen auf die Gesamtmenge der Monomeren, mindestens eines acyclischen Olefins der Formel VIII 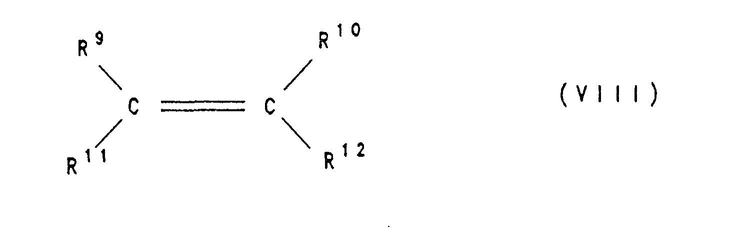 worin R⁹, R¹⁰, R¹¹ und R¹² gleich oder verschieden sind und ein Wasserstoffatom oder einen C₁-C₈-Alkylrest bedeuten, bei Temperaturen von -78 bis 150°C und einem Druck von 0,01 bis 64 bar, in Gegenwart eines Katalysators, welcher aus einem Aluminoxan der Formel IX 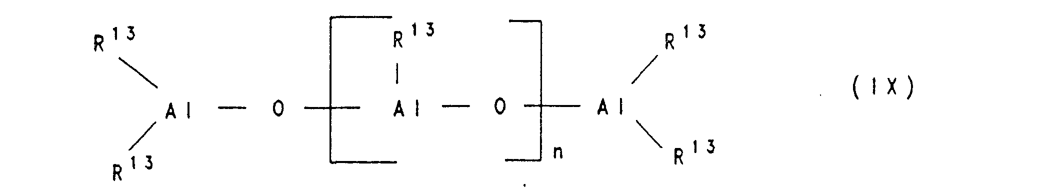 (= linearer Typ) und/oder der Formel X 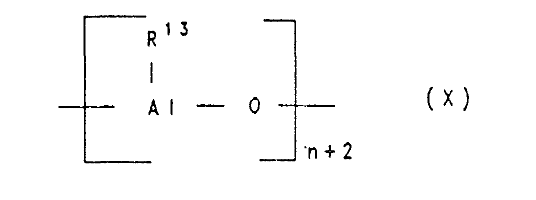 (= cyclischer Typ), wobei in den Formeln IX und X die Reste R¹³ gleich oder verschieden sind und eine C₁-C₆-Alkylgruppe oder Phenyl oder Benzyl bedeuten und n eine ganze Zahl von 0 bis 50 ist, und einem Metallocen der Formel XI 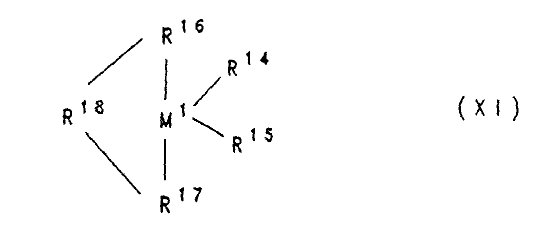 besteht, worin
- M¹: Titan, Zirkon, Hafnium, Vanadium, Niob oder Tantal ist,
- R¹⁴ und R¹⁵: gleich oder verschieden sind und ein Wasserstoffatom, ein Halogenatom, eine C₁-C₁₀-Alkylgruppe, eine C₁-C₁₀-Alkoxygruppe, eine C₆-C₁₀-Arylgruppe, eine C₆-C₁₀-Aryloxygruppe, eine C₂-C₁₀-Alkenylgruppe, eine C₇-C₄₀-Arylalkylgruppe, eine C₇-C₄₀-Alkylarylgruppe oder eine C₈-C₄₀- Arylalkenylgruppe bedeuten,
- R¹⁶ und R¹⁷: gleich oder verschieden sind und einen ein- oder mehrkernigen Kohlenwasserstoffrest, welcher mit dem Zentralatom M¹ eine Sandwichstruktur bilden kann, bedeuten,
- R¹⁸: 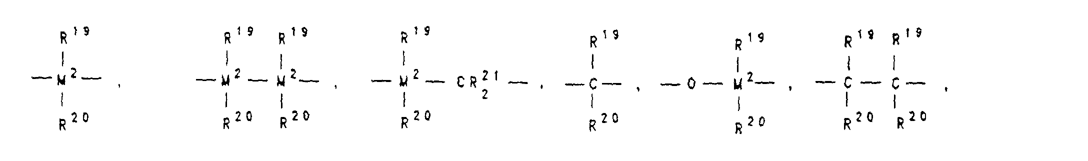 = BR¹⁹, = AlR¹⁹, -Ge-, -Sn-, -O-, -S-, = SO, = SO₂, = NR¹⁹, = CO, = PR¹⁹ oder = P(O)R¹⁹ ist, wobei R¹⁹, R²⁰ und R²¹
gleich oder verschieden sind und ein Wasserstoffatom, ein Halogenatom, eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder R¹⁹ und R²⁰ oder R¹⁹ und R²¹ jeweils mit den sie verbindenden Atomen einen Ring bilden, und
- M²: Silizium, Germanium oder Zinn ist. Dabei weist der Teil des Metallocenmoleküls, der durch M¹ und die Substituenten R¹⁶-R¹⁷ gebildet wird, C₁-Symmetrie auf oder liegt, falls R¹⁶ und R¹⁷ gleich sind, in der meso-Form vor.

Dabei steht der Ausdruck Alkyl für geradkettiges oder verzweigtes Alkyl.

Das monocyclische Olefin VII kann auch substituiert sein (z.B. durch Aryl- oder Alkylreste).

Bevorzugt wird in flüssigem Polycycloolefin I - VI, in Gemischen von Polycycloolefin oder in konzentrierten Lösungen polymerisiert.

Beim Verfahren zur Herstellung von "chemisch einheitlichen" Cycloolefincopolymeren, die geeignet sind zur Herstellung der erfindungsgemäßen faserverstärkten Materialien, wird mindestens ein polycyclisches Olefin der Formeln I, II, III, IV, V oder VI, vorzugsweise ein Polycycloolefin der Formeln I oder III, polymerisiert.
Das zweite Comonomer ist dabei vorzugsweise ein acyclisches Olefin der Formel VIII, worin R⁹, R¹⁰, R¹¹ und R¹² gleich oder verschieden sind und ein Wasserstoffatom oder einen C₁-C₈-Alkylrest bedeuten. Bevorzugt sind Ethylen oder Propylen. Gegebenenfalls wird zusätzlich auch ein monocyclisches Olefin der Formel VII, worin n eine Zahl von 2 bis 10 ist, verwendet.

Insbesondere werden Copolymere von polycyclischen Olefinen, vorzugsweise der Formeln I und III, mit den acyclischen Olefinen VIII hergestellt.

Besonders bevorzugte Cycloolefine sind Norbornen und Tetracyclododecen, wobei diese durch (C₁-C₆)-Alkyl substituiert sein können. Sie werden vorzugsweise mit Ethylen copolymerisiert; besondere Bedeutung besitzen Ethylen/Norbornen-Copolymere.

Als polycyclische Olefine, monocyclische Olefine und offenkettige Olefine sind auch Gemische zweier oder mehrerer Olefine des jeweiligen Typs zu verstehen. Das heißt, es können neben polycyclischen Bicopolymeren auch Ter- und Multicopolymere hergestellt werden.

Die erfindungsgemäßen faserverstärkten Materialien eignen sich besonders zur Herstellung von Extrusionsteilen wie Folien, Schläuchen, Rohren, Stangen und Fasern als auch zur Herstellung von Spritzgußartikeln beliebiger Form und Größe.

Der besondere Vorteil der chemisch einheitlichen Cycloolefincopolymeren besteht in ihrer besonders einfachen Herstellbarkeit und ihrer besonders ausgeprägten Lösungsmittelstabilität gegenüber unpolaren Lösungsmitteln. Die von anderen statistischen Cycloolefincopolymeren bekannten vorteilhaften Eigenschaften wie hydrolytische Stabilität, geringe Wasseraufnahme und Witterungsbeständigkeit sind jedoch erhalten.
Der Kristallinitätsgrad von chemisch einheitlichen Cycloolefincopolymeren liegt zwischen 0.1 und 50 %, vorzugsweise zwischen 2 und 40 %.
Er ist bestimmbar nach der literaturbekannten Methode der Röntgenographie (vgl. K. Kakudo, N. Kasai, X-Ray Diffraction by Polymers, Elsevier, Amsterdam 1972).
Vorzugsweise besteht das mit Fasern verstärkte Cycloolefincopolymere aus einem einzigen Polycycloolefin der allgemeinen Formel I bis VI und entweder mindestens einem Monocycloolefin der allgemeinen VII oder mindestens einem acyclischen Olefin der allgemeinen Formel VIII. Blöcke aus Polycycloolefin fehlen im Polymermolekül. Im Grenzfall sind das Polycycloolefin und das Olefin VII und/oder VIII im Polymermolekül regelmäßig und alternierend angeordnet.

Besonders bevorzugt ist es, wenn als acyclisches Olefin der allgemeinen Formel VIII ein 1-Olefin wie Ethylen, Propylen oder Buten-1 verwendet wird.
Insbesondere bevorzugt ist es, wenn das Copolymere aus äquimolaren Mengen Norbornen und Ethylen besteht und die beiden Monomer-Moleküle im Polymer regelmäßig und alternierend angeordnet sind.

Die zur Verstärkung dienenden Fasern können aus Kohlenstoff, Metall, Keramik oder Aramid bestehen. Auf diese Weise lassen sich licht-undurchlässige Materialien mit hoher Festigkeit erzeugen. Aus wirtschaftlichen Gründen ist es vorteilhaft, Glasfasern zur Verstärkung zu verwenden. Falls das eingesetzte Cycloolefincopolymer transparent ist und die Brechungsindices von Copolymer und Glasfaser übereinstimmen, kann man ein transparentes faserverstärktes Cycloolefinpolymer-Material erhalten. Falls der Unterschied der Brechungsindices zu groß ist oder das eingesetzte Cycloolefincopolymer eine zu hohe Kristallinität aufweist, also nicht mehr transparent ist, so ist auch das faserverstärkte Cycloolefincopolymer-Material nicht transparent. Auf die Transparenz kommt es aber bei vielen Einsatzzwecken nicht an. Das erfindungsgemäße Material wird meist in Form von Granulat weiterverarbeitet. Langfaserverstärktes Material kann zum Wickeln von Rohren verwendet werden.

Die Cycloolefincopolymere (= "COC") gemäß EP 503 422 sind teilkristallin und besitzen daher einen Schmelzpunkt. Die Schmelze ist etwa 10-20 K oberhalb des Schmelzpunkts, d.h. bei etwa 295 - 310 °C verarbeitbar. In die Schmelze kann beispielsweise das Fasermaterial eingearbeitet werden.
Dagegen besitzen amorphe COC nur eine Glastemperatur und sind erst etwa 170 K oberhalb der Glastemperatur (etwa bei 350 °C) verarbeitbar. Die COC gemäß EP 503 422 sind bis zu einer Teilkristallinität von 20 % transparent. Bei einer Teilkristallinität von 20 - 40 % werden sie immer weniger transparent. Durch Abschrecken aus der Schmelze kann der Kristallinitätsgrad verringert werden. Die Verwendung von symmetrischen Monomer-Molekülen, die Reduzierung der Anzahl der Monomeren und eine Annäherung an ein äquimolares Molverhältnis bei der Synthese von COC erhöht die Kristallisationsneigung. Ein COC, das von Methyl-Norbornen als polycyclischem Olefin abgeleitet ist, wird eine geringere Kristallisationsneigung aufweisen als ein analoges COC, das sich von Norbornen ableitet.
Die nach dem Verfahren gemäß EP 50 3 422 herstellbaren COC sind praktisch frei von Blöcken die aus Monomeren der Formel I bis VI ("Norbornen-Blöcke") bestehen. Im allgemeinen folgt auf ein polycyclisches Monomer der Formel I bis VI mindestens ein Monomer der Formeln VII und/oder VIII.
Es ist überraschend, daß bei Einarbeitung von Verstärkungsfasern, insbesonders von Glasfasern in die COC gemäß EP 503 422 die Duktilität (z. B. die Reißdehnung) bei Temperaturen oberhalb der Glastemperatur zunimmt. Diesen Effekt kennt man sonst nur von teilkristallinen Polymeren mit einem Kristallinitätsgrad von mindestens 20 %, während er bei den 'chemisch einheitlichen' COC bereits bei deutlich niedrigeren Kristallinitätsgraden (zumindest ab 5 %) auftritt. Die erfindungsgemäßen faserverstärkten Materialien sind den faserverstärkten Materialien gemäß EP 451 858, die ein amorphes COC enthalten, überlegen. Dies zeigt sich in der höheren Wärmeformbeständigkeit sowie in der verbesserten thermoplastischen Verarbeitbarkeit der COC gemäß EP 503422.

Daß chemisch einheitliche Cycloolefincopolymere überraschenderweise besonders gut mit Glasfasern verstärkt werden können, liegt möglicherweise daran, daß sie einen sehr geringen Schrumpf nach der Verarbeitung aufweisen und es so nicht zu Ablösungen der Glasfaser von der Polymermatrix kommt. Dies führt zu einer besseren geometrischen Haftung.

Der Schrumpf wird als sogenannte Verarbeitungsgeschwindigkeit angegeben, die nach DIN 53464 bestimmt wird. Die Verarbeitungsgeschwindigkeit von chemisch einheitlichen Cycloolefincopolymeren beträgt weniger als 0,4 %.

Eine deutliche Verbesserung der mechanischen Eigenschaften von gefüllten und ungefüllten chemisch einheitlichen Cycloolefincopolymeren kann durch eine thermische Nachbehandlung und/oder den Einsatz eines geeigneten Nukleierungsmittels erreicht werden.

Der Anteil an Verstärkungsfasern, insbesondere Glasfasern, im erfindungsgemäßen Material beträgt vorzugsweise 10 bis 90 Gew.-%, insbesondere 15 bis 75 Gew.-%.
Zur Herstellung eines erfindungsgemäßen faserverstärkten Cycloolefincopolymer-Materials vermischt man die Schmelze eines oben näher definierten chemisch einheitlichen Cycloolefincopolymeren mit dem gewünschten Anteil an Verstärkungsfasern.

Die verwendeten Glasfasern besitzen meist Schlichten, die Glasfilamente gegen mechanische Beanspruchung schützen und Spinnfäden aus Glas locker miteinander verbinden.

Hauptbestandteile von Schlichten sind gemäß WO 86/ 01811 filmbildende Polymere und Gleitmittel sowie bei Bedarf Haftvermittler und sonstige Additive. Die filmbildenden Polymere sind in einem wässrigen Medium dispergierbar, löslich oder emulgierbar, gleichfalls das Reaktionsprodukt mit Prozeßhilfsmitteln. Der Gehalt an Wasser in der wässrig-chemischen Kombination der Schlichtebestandteile ist so ausgelegt, daß diese den effektiven Gehalt an Feststoff auf der Glasfaser ergeben.

Die wässrig-chemische Kombination zur Behandlung von Glasfasern kann bei jeder Methode für die Herstellung von geschnittener Glasfaser oder Endlosglasfaser eingesetzt werden. Sie kann z.B. auf die Naß-Schneideoperation angewendet werden, bei der die Fasern in Bündeln zusammengefaßt und direkt im Entstehungsprozeß geschnitten werden oder die chemisch behandelten Glasfasern in Bündeln oder Strängen zusammengefaßt, aufgewunden und erst nachfolgend geschnitten werden.

Bei dem zum Stand der Technik gehörenden Materialien aus glasfaserverstärktem Kunststoff tritt das Problem auf, daß die (polaren) Glasfasern an unpolaren Polymeren manchmal schlecht haften und daher die mechanische Beständigkeit der Formkörper nicht optimal ist. Man hat daher in diesem Zusammenhang zur besseren Kopplung bereits Haftvermittler eingesetzt. Diese Haftvermittler werden entweder bei der Behandlung mit der wässrigenchemischen Kombination der Schlichte-Bestandteile oder durch eine separate Behandlung mit einer Lösung des Haftvermittlers auf die Glasfaser aufgebracht.

Außerdem ist es möglich, die Haftvermittler in die Schmelze des Polymeren einzutragen. Diese Methode besitzt den Vorteil, daß keine Lösungen verarbeitet werden müssen. Die Haftvermittler können auch, wie bei den sonstigen Additiven möglich, durch Bereitstellung von Masterbatches, die das Verdünnungsprinzip ausnutzen, vorteilhaft in den Composite eingearbeitet werden.

Dieser Zusatz von Haftvermittlern ist auch bei dem erfindungsgemäßen Verfahren zur Herstellung von glasfaserverstärkten chemisch einheitlichen Cycloolefincopolymeren von Vorteil. Man kann erfindungsgemäß sowohl einen Polymerschmelz-Haftvermittler zusetzen oder die Glasfaser mit einem Haftvermittler überziehen.

Bekannte Haftvermittler sind auswählbar aus der Gruppe der Vinylsilane, der Methacyrylsilane, der Aminosilane, der Epoxysilane und der Methacrylat-Chromchlorid-Komplexe.

Bevorzugt sind organische Haftvermittler auf Polymerbasis, wobei besonders bevorzugt die organischen Haftvermittler sind, bei denen es sich um funktionalisierte Cycloolefincopolymere handelt. Vorteilhafterweise wird dabei ein funktionalisiertes, "chemisch einheitliches" Cycloolefincopolymer als Haftvermittler eingesetzt.

Vorzugsweise wird das funktionalisierte "chemisch einheitliche" Cycloolefincopolymer durch Pfropfung eines chemisch einheitlichen Cycloolefincopolymeren mit einem polaren Monomeren hergestellt. Besonders vorteilhaft ist es, wenn das bei der Pfropfung verwendete polare Monomere ausgewählt wird aus der Gruppe der alpha, beta-ungesättigten Carbonsäuren, der alpha, beta-ungesättigten Carbonsäurederivate, der organischen Siliziumverbindungen mit olefinisch ungesättigter und hydrolysierbarer Gruppe, der olefinisch ungesättigten Verbindungen mit Hydroxylgruppe und der olefinisch ungesättigten Epoxymonomeren. Ähnliche gepfropfte Polymere, die sich allerdings nicht von "chemisch einheitlichen" Cycloolefincopolymeren ableiten, sind bereits bekannt.

An das verwendete Glas werden keine besonderen Anforderungen gestellt. Vorzugsweise bestehen die Glasfasern aus Magnesium-Alumo-Silikat mit einem Brechungsindex von 1,50 bis 1,56 und enthalten 60 bis 68 Gew.-% SiO₂, 23 bis 29 Gew.-% Al₂O₃ und 8 bis 12 Gew.-% MgO. Das einzuarbeitende Fasermaterial weist üblicherweise eine mittlere Faserlänge von 0,0001 - 7 mm, insbesondere 0,1 bis 2 mm auf.
Die Erfindung wird durch die Beispiele näher erläutert.

### Beispiele:

### Beispiel 1 :

Ein 70 l-Reaktor wurde mit Ethylen gefüllt und mit 17,6 l einer 85 gewichtsprozentigen Lösung von Norbornen in Toluol sowie mit 12,4 I Dekalin gefüllt. Durch mehrfaches Aufdrücken von Ethylen ( 6 bar) wurde die Lösung mit Ethylen gesättigt. Es wurde ein Druck von 3,0 bar ( Überdruck) eingestellt, 950 cm³ toluolische Methylaluminoxanlösung ( 10,1 Gew. % Methylaluminoxan der Molmasse 1300 g/mol nach kryoskopischer Bestimmung) in den Reaktor gegeben und 15 min bei 70°C gerührt. Eine Lösung von 157 mg Isopropylen-(9-fluorenyl)(1-(3-methyl)-cyclopentadienyl)zirkondichlorid in 80 cm³ toluolischer Methylaluminoxanlösung wurde nach 15 min Voraktivierung zugegeben (zum Zweck der Molekulargewichtsregelung kann Wasserstoff vor der Katalysatorzugabe eindosiert werden). Unter Rühren (750 Upm) wurde 30 Minuten bei 70°C polymerisiert, wobei der Ethylendruck durch Nachdosieren bei 3,0 bar gehalten wurde. Die Reaktionslösung wurde anschließend in einen zweiten Reaktor eingeleitet, in dem 200 ml Isopropanol als Stoppungsmittel vorgelegt waren. Die so abgestoppte Reaktionslösung wurde in einen Fällungsreaktor abgelassen und dabei in 200 l Aceton eingerührt. Anschließend wurde dieses Fällungsbad über eine Drucknutsche geleitet, so daß der ausgefallene Feststoff isoliert werden konnte. Dieser Feststoff wurde noch mehrmals mit Aceton gewaschen und anschließend bei 80°C und einem Druck von 0,2 bar 14 Stunden getrocknet.

Es wurden 1,89 kg eines farblosen Polymeren erhalten. Es wurde eine Viskositätszahl (Dekalin, 135°C) von 75 cm³/g und eine Glastemperatur von 137°C sowie ein Schmelzpunkt von 287°C gemessen. Das Norbornen/Ethylen - Einbauverhältnis ist gemäß NMR-Spektrum etwa 50 Mol-% Norbornen zu 50 Mol-% Ethylen. Dieses Cycloolefincopolymere wird nachstehend als COC A1 bezeichnet.

### Beispiel 2 :

Ein 70 l-Reaktor wurde mit Ethylen gefüllt und mit 17,6 l einer 85 gewichtsprozentigen Lösung von Norbornen in Toluol sowie mit 12,4 I Dekalin gefüllt. Durch mehrfaches Aufdrücken von Ethylen (6 bar) wurde die Lösung mit Ethylen gesättigt. Es wurde ein Druck von 6,0 bar (Überdruck) eingestellt, 950 cm³ toluolische Methylaluminoxanlösung (10,1 Gew. % Methylaluminoxan der Molmasse 1300 g/mol nach kryoskopischer Bestimmung) in den Reaktor gegeben und 15 min bei 70°C gerührt. Eine Lösung von 75 mg Diphenylmethylen(9-Fluorenyl)-cyclopentadienyl-zirkondichlorid in 40 cm³ toluolischer Methylaluminoxanlösung wurde nach 15 min Voraktivierung zugegeben (zum Zweck der Molekulargewichtsregelung kann Wasserstoff vor der Katalysatorzugabe eindosiert werden). Unter Rühren (750 Upm) wurde 30 Minuten bei 70°C polymerisiert, wobei der Ethylendruck durch Nachdosieren bei 6,0 bar gehalten wurde. Die Reaktionslösung wurde anschließend in einen zweiten Reaktor eingeleitet, in dem 200 ml Isopropanol als Stoppungsmittel vorgelegt waren. Die so abgestoppte Reaktionslösung wurde in einen Fällungsreaktor abgelassen und dabei in 200 l Aceton eingerührt. Anschließend wurde dieses Fällungsbad über eine Drucknutsche geleitet, so daß der ausgefallene Feststoff isoliert werden konnte. Dieser Feststoff wurde noch mehrmals mit Aceton gewaschen und anschließend bei 80°C und einem Druck von 0,2 bar 14 Stunden getrocknet.

Es wurden 7,8 kg Polymer erhalten, das eine Glastemperatur von 181°C und eine Viskositätszahl (gemessen in Dekalin bei 135°C) von 108 aufweist. Das Polymer setzt sich zusammen aus 46 Gew. % Ethylen und 54 Gew. % Norbornen, die statistisch im Polymeren verteilt sind.

Dieses Polymere wird nachfolgend COC A2 genannt.

### Beispiel 3 : (Füllung der Polymeren mit Glasfasern und Granulierung)

In einem Extruder wurde das COC A1 zusammen mit 30 Gewichtsprozent Glasfasern extrudiert und zu Granulat verarbeitet. Die Extrusionstemperatur lag zwischen 260 und 300°C (unterschiedliche Temperaturen in unterschiedlichen Heizzonen des Extruders). Zur Entgasung der Polymerschnelze wurde ein Vakuum von 100 mbar angelegt. Bei den verwendeten Glasfasern handelt es sich um Textilglasroving P 365 (Handelsprodukt der Fa. VETROTEX; Herzogenrath, Bundesrepublik Deutschland). Der Nennfilamentdurchmesser (DIN 53811) der Glasfasern beträgt 14 µm, die Strangfeinheit (DIN 53830) 2400 tex und die Spinnfadenfeinheit (DIN 53830) 300 tex. Es wurde ein farbloses Granulat aus COC A1, das mit 30 Gewichtsprozent Glasfasern gefüllt ist, erhalten.

Zur Herstellung eines mit 30 Gew. % Glasfasern gefüllten Granulats von COC A2 mußte die Extrusionstemperatur auf 310 bis 350°C angehoben werden. Die übrigen Bedingungen entsprechen den oben genannten Extrusionsbedingungen für glasfasergefülltes COC A1. Da 350°C bereits die obere Verarbeitungstemperatur für COC darstellt, trat bei dieser Granulierung bereits eine Schädigung des Polymeren auf, die sich in einer deutlichen Gelbfärbung des Granulates niederschlug.

Die Verarbeitbarkeit von thermoplastischen Polymeren wird durch den MFI charakterisiert. Je höher der MFI (DIN 53735) bei der Verarbeitungstemperatur ist, desto niedriger viskos ist die Polymerschmelze und desto besser läßt sich das Material durch Extrusion und Spritzguß verarbeiten. Daher wurde an dem erhaltenen Granulat der MFI bestimmt. Der gefundenene Wert ist zusammen mit Vergleichswerten für andere mit Glasfasern gefüllte Cycloolefincopolymere in Tabelle 1 aufgeführt.

**Tabelle 1**

| MFI von COC A1 und COC A2 jeweils mit 30 Gew. % Glasfasern gefüllt | |
|---|---|
| | MFI (g/10 min) 310°C; 10kg |
| COC A1 | 284 |
| COC A2 | 73 |

Die aufgeführten Daten zeigen eindeutig, daß glasfasergefüllte Composites von COC A1 eine überlegene thermoplastische Verarbeitbarkeit aufweisen.

### Beispiel 4 :

Aus dem unter Beispiel 2 hergestelltem Granulat wurden durch Spritzguß Normprüfkörper hergstellt. An diesen Normprüfkörper erfolgte die Bestimmung der HDT-B gemäß DIN 53461 . Die ermittelten Werte sind in Tabelle 2 zusammengestellt.

**Tabelle 2**

| HDT-B von COC-A1 und COC-A2 jeweils mit 30 Gew.-% Glasfasern gefüllt | |
|---|---|
| | HDT-B/°C |
| COC A1 | 244 |
| COC A2 | 177 |

Diese Werte belegen, daß das mit Glasfasern gefüllte chemisch einheitliche Cycloolefincopolymer eine deutlich höhere Wärmeformbeständigkeit aufweist als die entsprechenden Composites auf Basis des Cycloolefincopolymeren COC A2 .

### Beispiel 5 :

Es wurden durch Spritzguß Normprüfkörper aus glasfaserverstärktem COC A1 und COC A2 (jeweils 30 % Glasfasern) sowie aus ungefülltem COC A1 hergestellt. An ihnen wurden durch Zug-Dehnungs-Versuche die mechanischen Eigenschaften bestimmt. Die Bestimmung der mechanischen Eigenschaften erfolgte bei Raumtemperatur und bei 210°C. Die entsprechenden Werte sind in Tabelle 3, 4, 5 und 6 aufgeführt.

**Tabelle 3**

| Mechanische Eigenschaften von COC A1 mit und ohne Glasfaser bei 23°C | | | |
|---|---|---|---|
| | E-Modul in MPa | Bruchspannung in MPa | Reißdehnung in % |
| COC A1 ohne Glasfasern | 3971 | 43,7 | 1,8 |
| COC A1 mit 30 Gew. % Glasfasern | 10230 | 83,5 | 1,8 |

**Tabelle 4**

| Mechanische Eigenschaften von COC A1 mit und ohne Glasfaser bei 210°C | | | |
|---|---|---|---|
| | E-Modul in MPa | Bruchspannung in MPa | Reißdehnung in % |
| COC A1 ohne Glasfasern | 35 | 3,9 | 55,6 |
| COC A1 mit 30 Gew. % Glasfasern | 463 | 1,9 | 17,3 |

Die in Tabelle 3 und 4 aufgeführten Werte zeigen, daß durch das Eintragen von Glasfasern in chemisch einheitliche Polymere eine deutliche Verbesserung der mechanischen Eigenschaften des Polymeren erzielt wird. Besonders deutlich ist die überlegene Steifigkeit des mit Glasfasern gefüllten COC A1 bei 210°C.

**Tabelle 5**

| Mechanische Eigenschaften von COC A1 und COC A2 mit 30 Gew. % Glasfaser gefüllt, bei 23°C | | | |
|---|---|---|---|
| | E-Modul in MPa | Bruchspannung in MPa | Reißdehnung in % |
| COC A1 | 10230 | 83,5 | 1,8 |
| COC A2 | 8320 | 75,1 | 1,6 |

**Tabelle 6**

| Mechanische Eigenschaften von COC A1 und COC A2 jeweils mit 30 Gew. % Glasfaser gefüllt, bei 210°C | | | |
|---|---|---|---|
| | E-Modul in MPa | Bruchspannung in MPa | Reißdehnung in % |
| COC A1 | 463 | 1,9 | 17,3 |
| COC A2 | nicht mehr meßbar | | |

Die in Tabelle 5 und 6 zusammengestellten Werte zeigen, daß die mechanischen Eigenschaften eines mit Glasfasern gefüllten chemisch einheitlichen Cycloolefincopolymeren denen eines mit Glasfasern gefüllten statistischen Cycloolefincopolymeren deutlich überlegen sind.

Die Beispiele 1 bis 5 belegen, daß es nur mit glasfaserverstärkten chemisch einheitlichen Cycloolefincopolymeren gelingt, eine Wärmeformbeständigkeit (HDT-B) von größer 180°C, gute mechanische Eigenschaften wie hohe Steifigkeit und gleichzeitig eine gute Verarbeitbarkeit zu realisieren.

Mit Hilfe einer Zugprüfmaschine ®Instron (Fa. Instron, Offenbach, Bundesrepublik Deutschland) wurden die Reißfestigkeit, d. h. die Zugspannung, bei der der Normzugstab reißt und die Reißdehnung, d. h. die maximale Dehnung nach DIN 53455 bestimmt. Der E-Modul berechnet sich aus der Zug-Dehnungs-Kurve nach DIN 53457. Die Wärmeformbeständigkeit HDT-B wurde nach DIN 53461 bestimmt. Die Bestimmung des MFI erfolgte gemäß DIN 53735. Die Viskositätszahl wurde gemäß DIN 53726 bestimmt.

Die Herstellung des Granulates erfolgte mit einem Leistritz Laborextruder LSM 30.34 (Fa. Leistritz; Nürnberg, Bundesrepublik Deutschland).

Die Normprüfkörper wurden durch Spritzguß unter Verwendung einer Spritzgußmaschine Krauss Maffei KM 90-210 B (Fa. Krauss Maffei, Kunststofftechnik GmbH ; Düsseldorf; Bundesrepublik Deutschland) hergestellt.

## Patentansprüche

1. Faserverstärktes Cycloolefinpolymer-Material bestehend aus 1 bis 99 Gew.-% Verstärkungsfasern und 99 bis 1 Gew.-% eines Cycloolefincopolymeren, das aus mindestens einem Polycycloolefin der allgemeinen Formel I bis VI 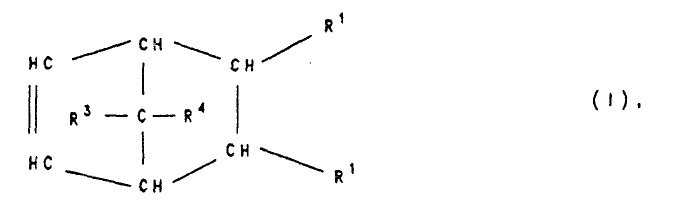 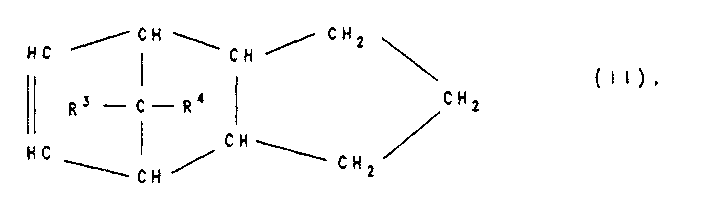 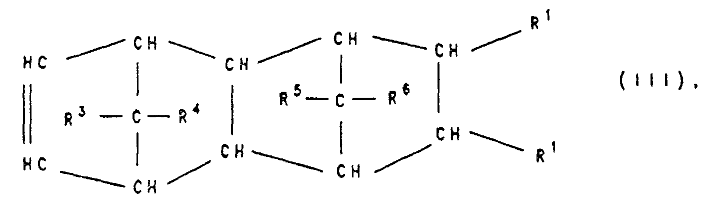 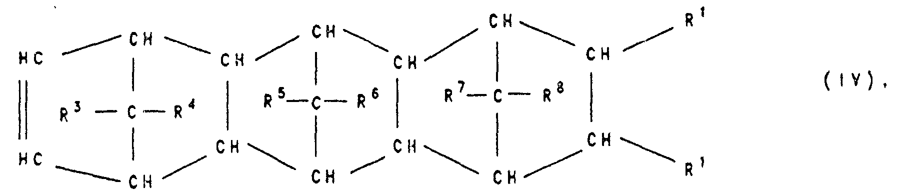 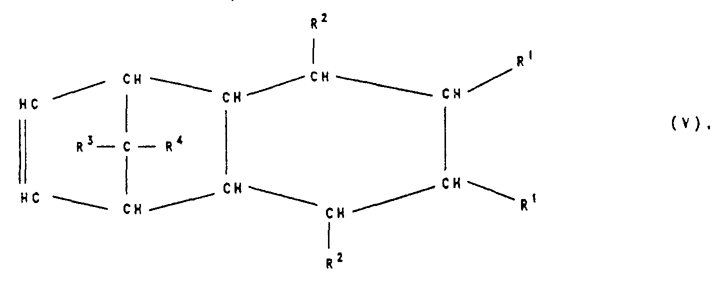 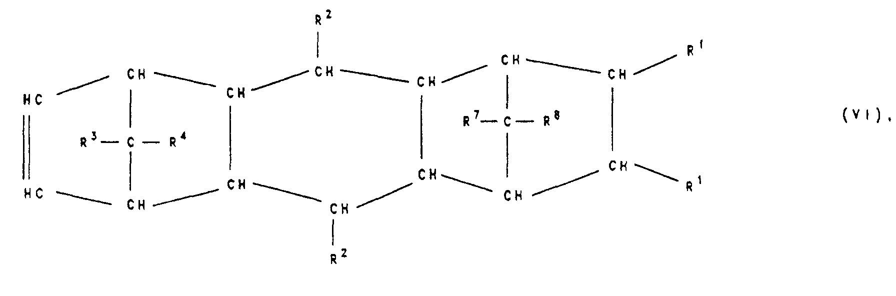 worin R¹, R², R³, R⁴, R⁵, R⁶, R⁷ und R⁸ gleich oder verschieden sind und ein Wasserstoffatom, einen C₆-C₁₆-Aryl- oder einen C₁-C₈-Alkylrest bedeuten, und mindestens einem Olefin aufgebaut ist, das ausgewählt wird aus Monocycloolefine der allgemeinen Formel VII 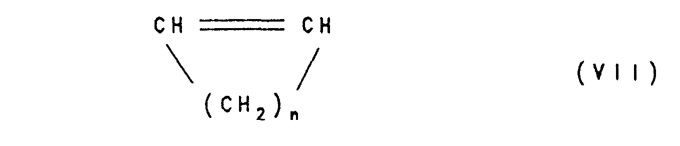 worin n eine Zahl von 2 bis 10 ist,
und/oder der Gruppe der acyclischen Olefine VIII, 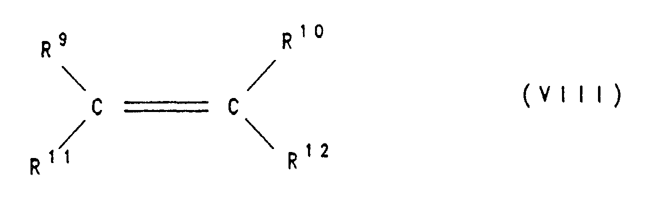 worin R⁹, R¹⁰, R¹¹ und R¹² gleich oder verschieden sind und ein Wasserstoffatom oder einen C₁-C₈-Alkylrest bedeuten,
**dadurch gekennzeichnet, daß** im Cycloolefincopolymer-Molekül die Monomer-Einheiten des Polycycloolefins der allgemeinen Formel I bis VI jeweils durch Monomer-Einheiten der cyclischen Olefine VII und/oder der acyclischen Olefine der allgemeinen Formel VIII getrennt sind.

2. Material gemäß Anspruch 1, **dadurch gekennzeichnet daß** ein einziges Polycycloolefin der Formel I bis VI und entweder mindestens ein monocyclisches Olefin der allgemeinen Formel VII oder mindestens ein acyclisches Olefin der allgemeinen Formel VIII im Polymermolekül vorhanden sind.

3. Material gemäß Anspruch 1 oder 2, **dadurch gekennzeichnet, daß** im Polymermolekül als Polycycloolefin Norbornen oder Tetracyclododecen und als acyclisches Olefin ein 1-Olefin vorhanden sind.

4. Material gemäß Anspruch 3, **dadurch gekennzeichnet, daß** im Polymermolekül Norbornen oder Tetracyclododecen sowie Ethylen vorhanden und regelmäßig angeordnet sind.

5. Material gemäß Anspruch 1, **dadurch gekennzeichnet, daß** das Cycloolefinpolymer-Material hergestellt wird durch Polymerisation von 0,1 bis 99,9 Gew.-%, bezogen auf die Gesamtmenge der Monomeren, mindestens eines Monomers der Formeln I, II, III, IV, V oder VI 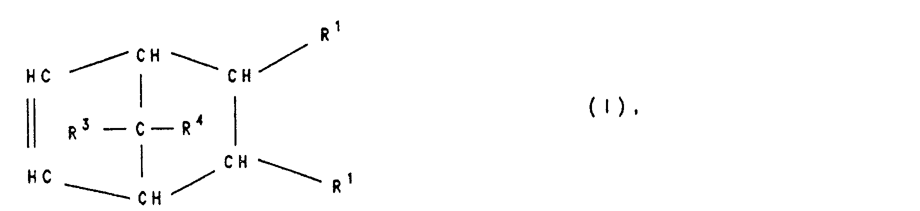 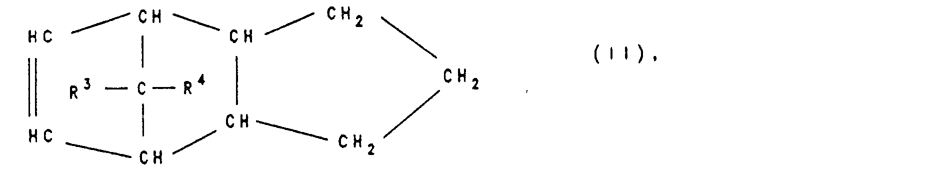 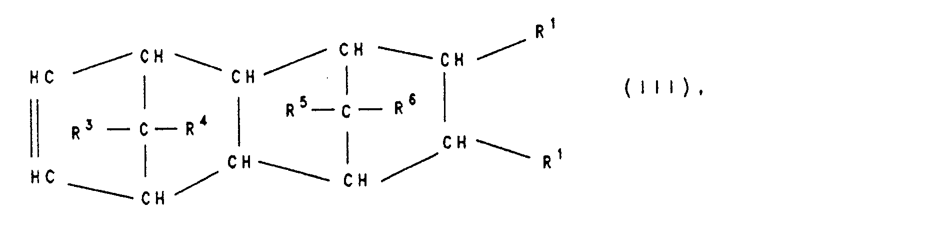 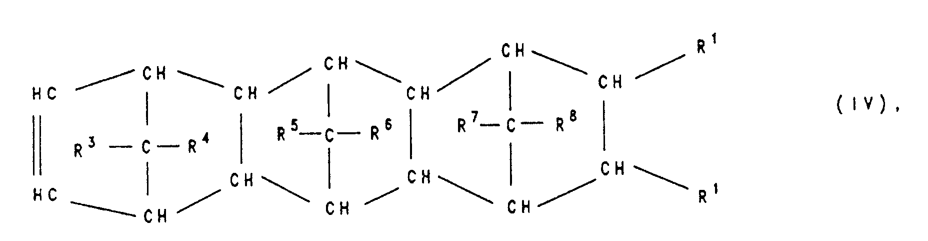 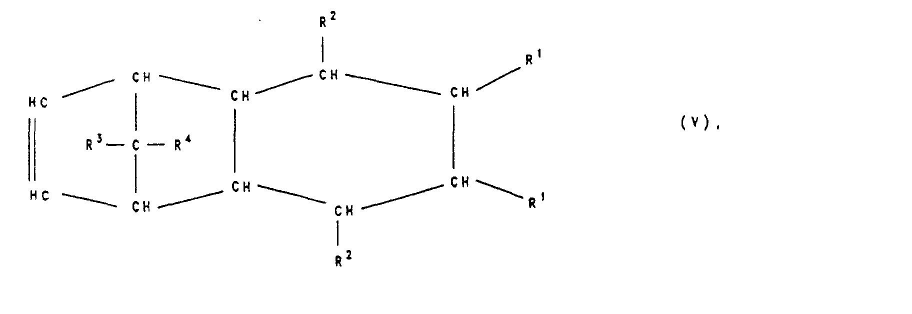 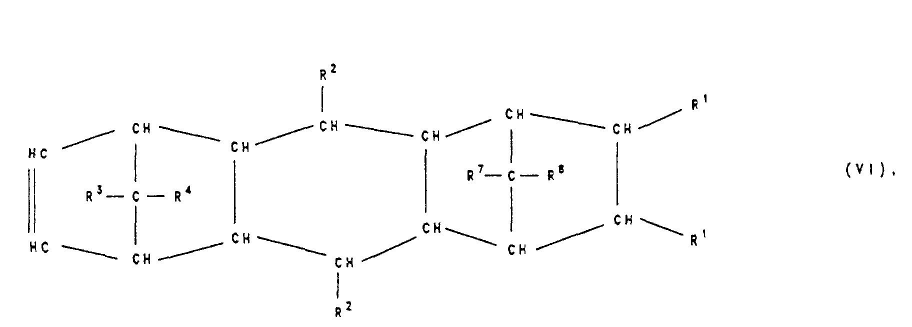 worin R¹, R², R³, R⁴, R⁵, R⁶, R⁷ und R⁸ gleich oder verschieden sind und ein Wasserstoffatom, einen C₆-C₁₆-Aryl- oder einen C₁-C₈-Alkylrest bedeuten, wobei gleiche Reste in den verschiedenen Formeln eine unterschiedliche Bedeutung haben können,
O bis 99,9 Gew.-%, bezogen auf die Gesamtmenge der Monomeren, eines Cycloolefins der Formel VII 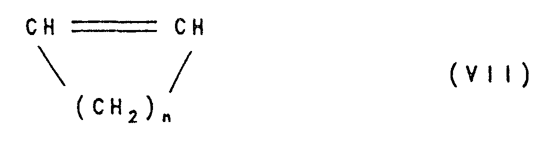 worin n eine Zahl von 2 bis 10 ist, und
0 bis 99,9 Gew.-%, bezogen auf die Gesamtmenge der Monomeren, mindestens eines acyclischen Olefins der Formel VIII 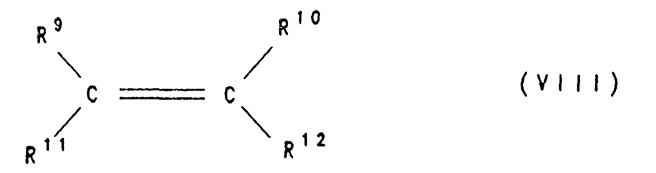 worin R⁹, R¹⁰, R¹¹ und R¹² gleich oder verschieden sind und ein Wasserstoffatom oder einen C₁-C₈-Alkylrest bedeuten, bei Temperaturen von -78 bis 150°C und einem Druck von 0,01 bis 64 bar, in Gegenwart eines Katalysators, welcher aus einem Aluminoxan der Formel IX 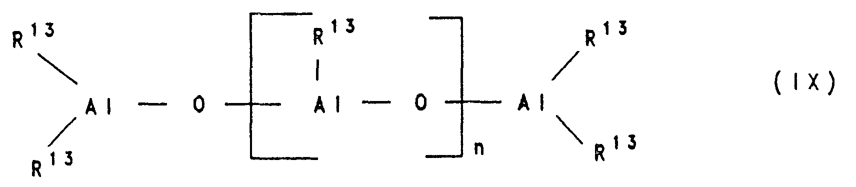 für den linearen Typ und/oder der Formel X 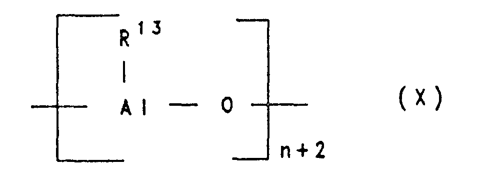 für den cyclischen Typ, wobei in den Formeln IX und X die Reste R¹³ gleich oder verschieden sind und eine C₁-C₆-Alkylgruppe oder Phenyl oder Benzyl bedeuten und n eine ganze Zahl von 0 bis 50 ist, und einem Metallocen der Formel XI 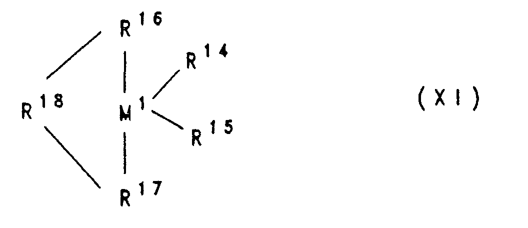 besteht, worin
M¹ Titan, Zirkon, Hafnium, Vanadium, Niob oder Tantal ist,
R¹⁴ und R¹⁵ gleich oder verschieden sind und ein Wasserstoffatom, ein Halogenatom, eine C₁-C₁₀-Alkylgruppe, eine C₁-C₁₀-Alkoxygruppe, eine C₆-C₁₀-Arylgruppe, eine C₆-C₁₀-Aryloxygruppe, eine C₂-C₁₀-Alkenylgruppe, eine C₇-C₄₀-Arylalkylgruppe, eine C₇-C₄₀-Alkylarylgruppe oder eine C₈-C₄₀-Arylalkenylgruppe bedeuten, R¹⁶ und R¹⁷ gleich oder verschieden sind und einen ein- oder mehrkernigen Kohlenwasserstoffrest, welcher mit dem Zentralatom M¹ eine Sandwichstruktur bilden kann, bedeuten,
R¹⁸ 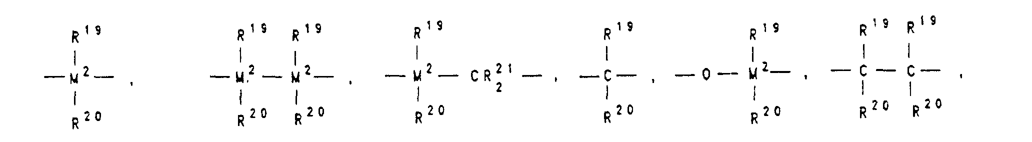 = BR¹⁹, = AIR¹⁹, -Ge-, -Sn-, -O-, -S-, = SO, = SO₂, = NR¹⁹, = CO, = PR¹⁹ oder = P(O)R¹⁹ ist, wobei R¹⁹, R²⁰ und R²¹
gleich oder verschieden sind und ein Wasserstoffatom, ein Halogenatom, eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder R¹⁹ und R²⁰ oder R¹⁹ und R²¹ jeweils mit den sie verbindenden Atomen einen Ring bilden, und
M² Silizium, Germanium oder Zinn ist, **dadurch gekennzeichnet, daß** der Teil des Metallocenmoleküls, der durch M¹ und die Substituenten R¹⁶-R¹⁷ gebildet wird, C₁-Symmetrie aufweist oder, falls R¹⁶ und R¹⁷ gleich sind, in der meso-Form vorliegt.

6. Material gemäß Anspruch 1 oder 3, **dadurch gekennzeichnet, daß** die Verstärkungsfasern aus Glasfaser bestehen.

7. Material gemäß Anspruch 1, **dadurch gekennzeichnet, daß** die Verstärkungsfasern aus Kohlenstoff, Metall, Keramik oder Aramid bestehen.

8. Material gemäß Anspruch 1, **dadurch gekennzeichnet, daß** das eingesetzte Cycloolefincopolymere transparent ist.

9. Material gemäß Anspruch 1, **dadurch gekennzeichnet, daß** das eingesetzte Cycloolefincopolymere nicht transparent ist.

10. Material gemäß Anspruch 6, **dadurch gekennzeichnet, daß** der Anteil an Glasfaser 10 bis 90 Gew.-% und der Anteil an Cycloolefincopolymeren 90 bis 10 Gew.-% beträgt.

11. Formkörper aus einem Material nach einem der Ansprüche 1 bis 10.

12. Verfahren zur Herstellung eines faserverstärkten Cycloolefinpolymer-Materials, wobei man eine Schmelze des Cycloolefincopolymeren mit Verstärkungsfasern vermischt und dabei einen Anteil von 1 bis 99 Gew.-% Verstärkungsfasern einstellt, **dadurch gekennzeichnet, daß** das Cycloolefincopolymere aus mindestens einem Polycycloolefin der allgemeinen Formel I bis VI und mindestens einem Olefin, das ausgewählt wird aus der Gruppe der Monocycloolefine der allgemeinen Formel VII und/oder der Gruppe der acyclischen Olefine der allgemeinen Formel VIII, besteht, wobei im Polymermolekül die eingesetzten Monomer-Einheiten des Polycycloolefins der allgemeinen Formel I bis VI jeweils durch Monomer-Einheiten des monocyclischen Olefins VII und/oder der acyclischen Olefine VIII getrennt sind.

13. Verfahren nach Anspruch 12, **dadurch gekennzeichnet, daß** man als Verstärkungsfaser Glasfaser mit einem Brechungindex von 1,50 bis 1,56 verwendet.

14. Verfahren nach Anspruch 13, **dadurch gekennzeichnet, daß** man die Glasfaser mit einem Haftvermittler überzieht und dann mit der Schmelze des Cycloolefincopolymeren vereinigt.

15. Verfahren nach Anspruch 14, **dadurch gekennzeichnet, daß** man der Schmelze des Cycloolefincopolymeren einen Haftvermittler zusetzt.

16. Verfahren nach Anspruch 14 oder 15, **dadurch gekennzeichnet, daß** man als Haftvermittler ein funktionalisiertes Cycloolefincopolymer einsetzt.

## Claims

1. A fiber-reinforced cycloolefin polymer material comprising 1 to 99% by weight of reinforcing fibers and 99 to 1% by weight of a cycloolefin copolymer which is built up from at least one polycycloolefin of the formulae I to VI 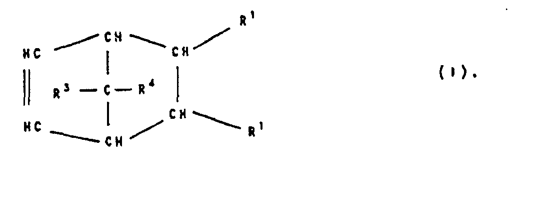 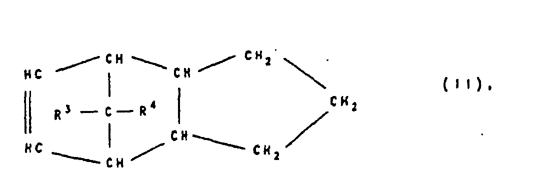 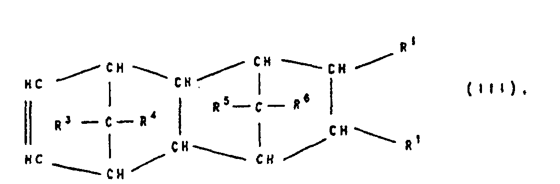 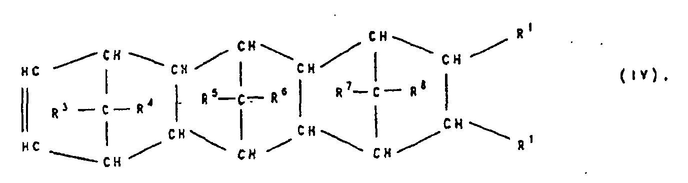 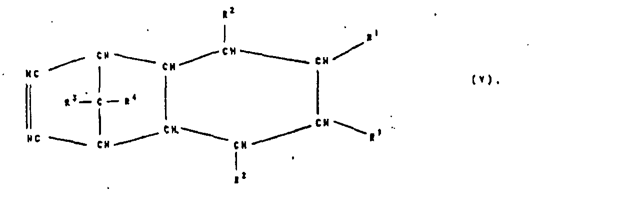 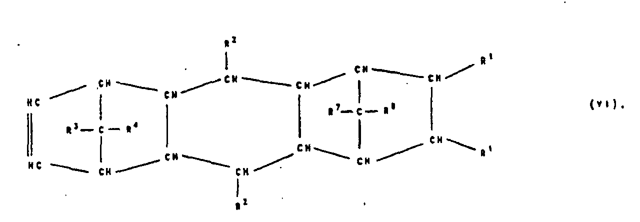 in which R¹, R², R³, R⁴, R⁵, R⁶, R⁷ and R⁸ are identical or different and are a hydrogen atom or a C₆-C₁₆-aryl or a C₁-C₈-alkyl radical,
and at least one olefin which is chosen from monocycloolefins of the formula VII 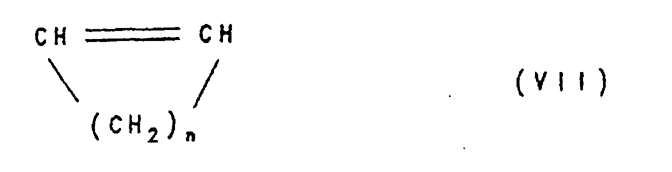 in which n is a number from 2 to 10,
and/or the group of acyclic olefins VIII 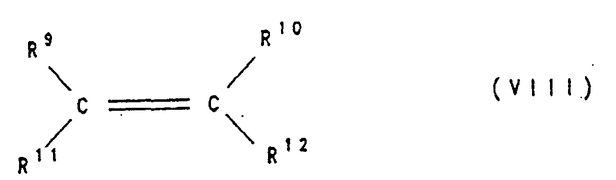 in which R⁹, R¹⁰, R¹¹ and R¹² are identical or different and are a hydrogen atom or a C₁-C₈-alkyl radical, in which, in the cycloolefin copolymer molecule, the monomer units of the polycycloolefin of the formulae I to VI are in each case separated by monomer units of the cyclic olefins VII and/or of the acyclic olefins of the formula VIII.

2. A material as claimed in claim 1, in which a single polycycloolefin of the formulae I to VI and either at least one monocyclic olefin of the formula VII or at least one acyclic olefin of the formula VIII are present in the polymer molecule.

3. A material as claimed in claim 1 or 2, in which norbornene or tetracyclododecene, as the polycycloolefin, and a 1-olefin, as the acyclic olefin, are present in the polymer molecule.

4. A material as claimed in claim 3, in which norbornene or tetracyclododecene and ethylene are present or arranged regularly in the polymer molecule.

5. A material as claimed in claim 1, in which the cycloolefin polymer material is prepared by polymerization of 0.1 to 99.9% by weight, based on the total amount of monomers, of at least one monomer of the formula I, II, III, IV, V or VI 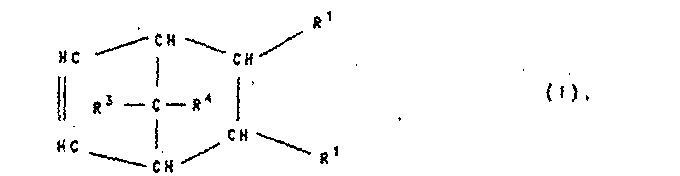 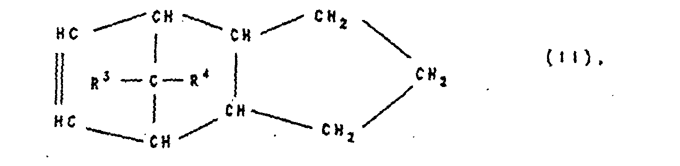 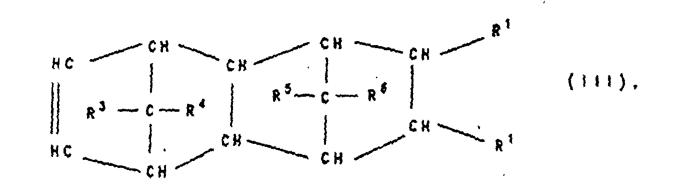 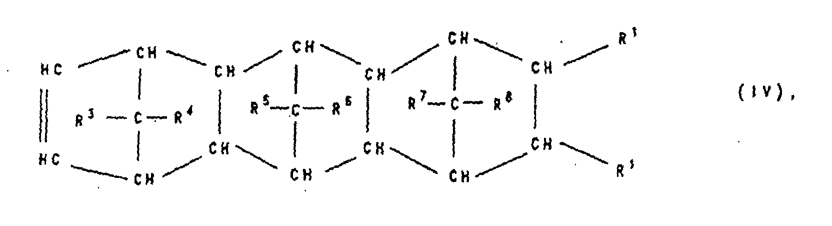 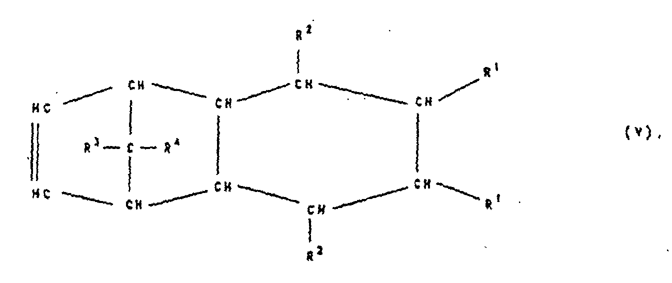 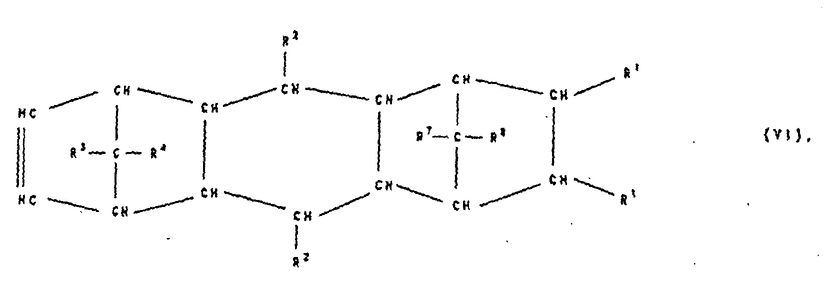 in which R¹, R², R³, R⁴, R⁵, R⁶, R⁷ and R⁸ are identical or different and are a hydrogen atom or a C₆-C₁₆-aryl or a C₁-C₈-alkyl radical, it being possible for the same radicals in the various formulae to have a different meaning,
0 to 99.9% by weight, based on the total amount of monomers, of a cycloolefin of the formula VII 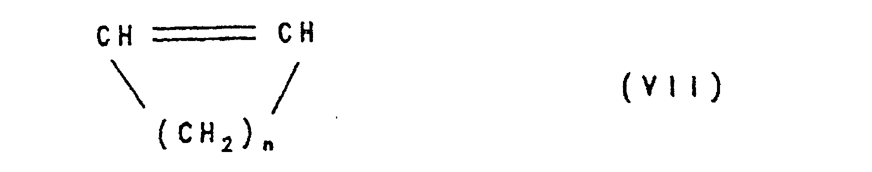 in which n is a number from 2 to 10, and
0 to 99.9% by weight, based on the total amount of monomers, of at least one acyclic olefin of the formula VIII 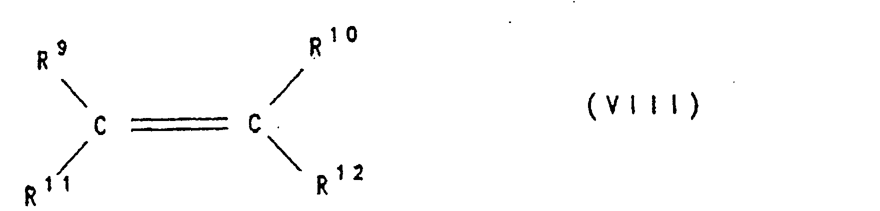 in which R⁹, R¹⁰, R¹¹ and R¹² are identical or different and are a hydrogen atom or a C₁-C₈-alkyl radical, at temperatures of -78 to 150°C under a pressure of 0.01 to 64 bar in the presence of a catalyst which comprises an aluminoxane of the formula IX 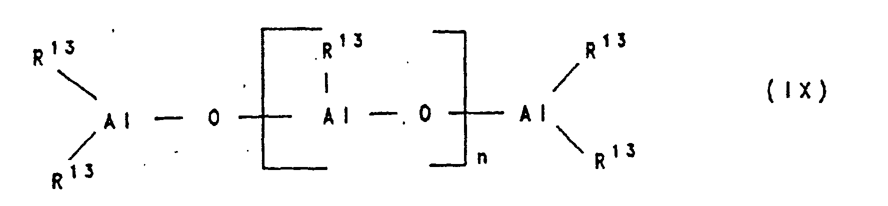 for the linear type and/or of the formula X 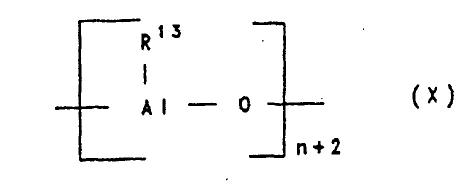 for the cyclic type, in which in the formulae IX and X the radicals R¹³ are identical or different and are a C₁-C₆-alkyl group or phenyl or benzyl and n is an integer from 0 to 50, and a metallocene of the formula XI 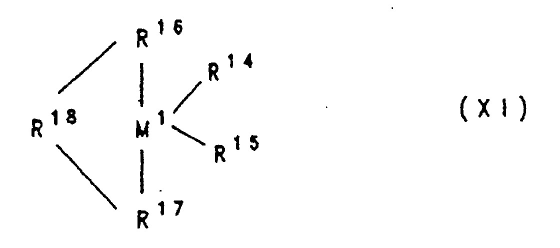 in which
M¹ is titanium, zirconium, hafnium, vanadium, niobium or tantalum,
R¹⁴ and R¹⁵ are identical or different and are a hydrogen atom, a halogen atom, a C₁-C₁₀-alkyl group, a C₁-C₁₀-alkoxy group, a C₆-C₁₀-aryl group, a C₆-C₁₀-aryloxy group, a C₂-C₁₀-alkenyl group, a C₇-C₄₀-arylalkyl group, a C₇-C₄₀-alkylaryl group or a C₈-C₄₀-arylalkenyl group,
R¹⁶ and R¹⁷ are identical or different and are a mono- or polynuclear hydrocarbon radical which can form a sandwich structure with the central atom M¹,
R¹⁸ is 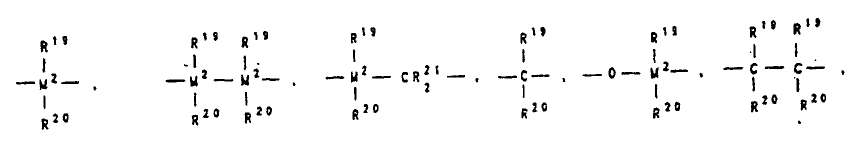 =BR¹⁹, =AlR¹⁹, -Ge-, -Sn-, -O-, -S-, =SO, =SO₂, =NR¹⁹, =CO, =PR¹⁹ or =P(O)R¹⁹, in which R¹⁹, R²⁰ and R²¹ are identical or different and are a hydrogen atom, a halogen atom, a C₁-C₁₀-alkyl group, a C₁-C₁₀-fluoroalkyl group, a C₆-C₁₀-fluoroaryl group, a C₆-C₁₀-aryl group, a C₁-C₁₀-alkoxy group, a C₂-C₁₀-alkenyl group, a C₇-C₄₀-arylalkyl group, a C₈-C₄₀-arylalkenyl group or a C₇-C₄₀-alkylaryl group, or R¹⁹ and R²⁰ or R¹⁹ and R²¹, in each case with the atoms joining them, form a ring, and
M² is silicon, germanium or tin, wherein the part of the metallocene molecule formed by M¹ and the substituents R¹⁶-R¹⁷ displays C₁-symmetry or, if R¹⁶ and R¹⁷ are identical, is in the meso-form.

6. A material as claimed in claim 1 or 3, in which the reinforcing fibers comprise glass fibers.

7. A material as claimed in claim 1, in which the reinforcing fibers are of carbon, metal, ceramic or aramid.

8. A material as claimed in claim 1, in which the cycloolefin copolymer employed is transparent.

9. A material as claimed in claim 1, in which the cycloolefin copolymer employed is not transparent.

10. A material as claimed in claim 6, in which the content of glass fibers is 10 to 90% by weight and the content of cycloolefin copolymers is 90 to 10% by weight.

11. A shaped article from a material as claimed in any one of claims 1 to 10.

12. A process for the preparation of a fiber-reinforced cycloolefin polymer material in which a melt of the cycloolefin copolymer is mixed with reinforcing fibers, a content of 1 to 99% by weight of reinforcing fibers being established, which comprises using the cycloolefin copolymer of at least one polycycloolefin of the formulae I to VI and at least one olefin chosen from the group of monocycloolefins of the formula VII and/or the group of acyclic olefins of the formula VIII, the monomer units of the polycycloolefin of the formulae I to VI employed in each case being separated by monomer units of the monocyclic olefin VII and/or of the acyclic olefins VIII in the polymer molecule.

13. The process as claimed in claim 12, wherein glass fibers having a refractive index of 1.50 to 1.56 are used as the reinforcing fibers.

14. The process as claimed in claim 13, wherein the glass fibers are coated with an adhesion promoter and then combined with the melt of the cycloolefin copolymer.

15. The process as claimed in claim 14, wherein an adhesion promoter is added to the melt of the cycloolefin copolymer.

16. The process as claimed in claim 14 or 15, wherein a functionalized cycloolefin copolymer is employed as the adhesion promoter.

## Revendications

1. Matériau en polymère de cyclooléfine renforcé par des fibres, constitué par 1 à 99% en poids de fibres de renforcement et 99 à 1% en poids d'un copolymère de cyclooléfine qui est constitué par au moins une polycyclooléfine de formule générale I à VI 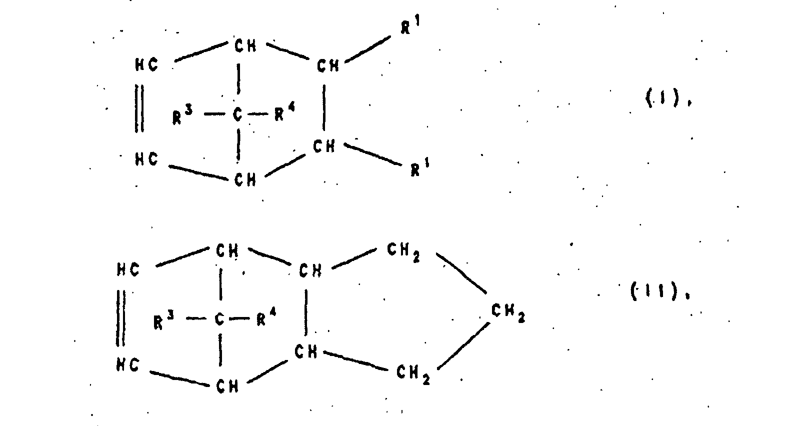 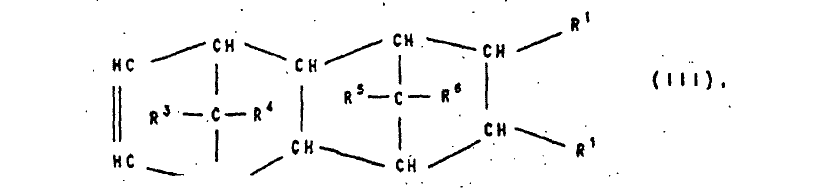 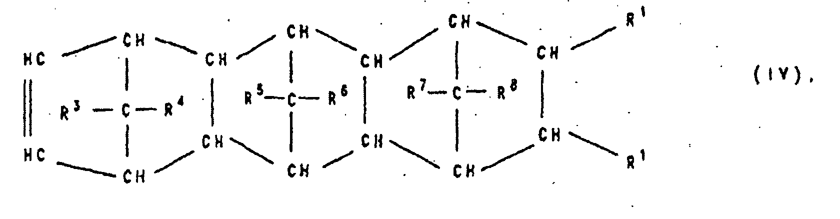 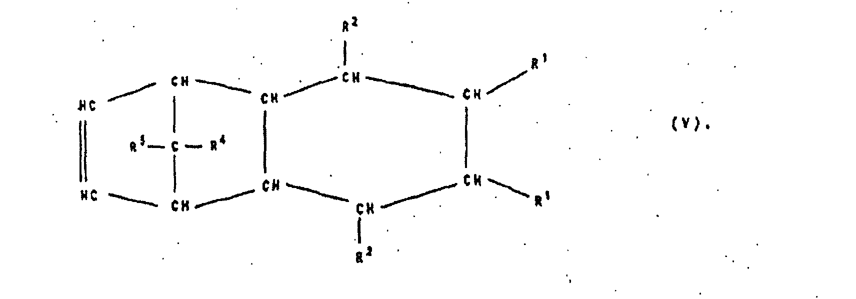 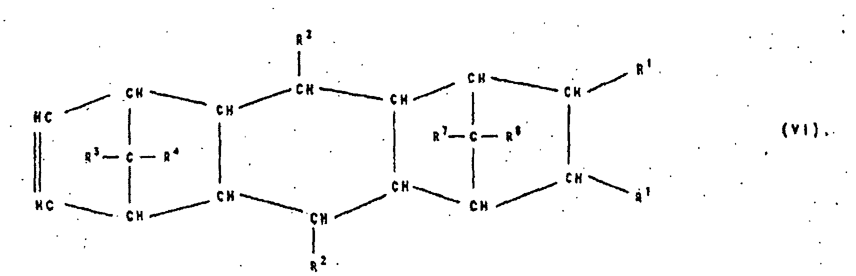 dans lesquelles R¹, R², R³, R⁴, R⁵, R⁶, R⁷ et R⁸ sont identiques ou différents et signifient un atome d'hydrogène, un radical aryle en C₆ à C₁₆ ou un radical alkyle en C₁ à C₈, et par au moins une oléfine choisie parmi les monocyclooléfines de formule générale VII 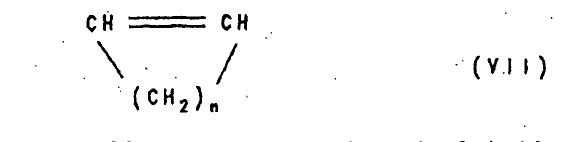 dans laquelle n est un nombre de 2 à 10,
et/ou dans le groupe des oléfines acycliques VIII, 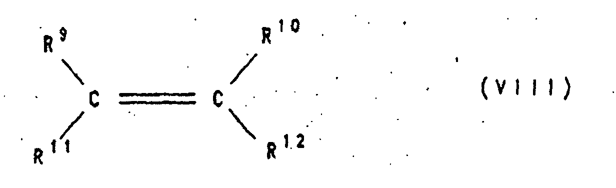 dans laquelle R⁹, R¹⁰, R¹¹ et R¹² sont identiques ou différents et signifient un atome d'hydrogène ou un radical alkyle en C₁ à C₈, **caractérisé en ce que** dans la molécule de copolymère de cyclooléfine, les unités monomères de la polycyclooléfine des formules générales I à VI sont à chaque fois séparées par des unités monomères des oléfines cycliques VII et/ou des oléfines acycliques de formule générale VIII.

2. Matériau selon la revendication 1, **caractérisé en ce que** dans la molécule polymère, on trouve une seule polycyclooléfine des formules I à VI et soit au moins une oléfine monocyclique de formule générale VII soit au moins une oléfine acyclique de formule générale VIII.

3. Matériau selon la revendication 1 ou 2, **caractérisé en ce que** dans la molécule polymère, on trouve comme polycyclooléfine du norbornène ou du tétracyclododécène et comme oléfine acyclique une 1-oléfine.

4. Matériau selon la revendication 3, **caractérisé en ce que** dans la molécule polymère, on trouve du norbornène ou du tétracyclododécène ainsi que de l'éthylène disposés régulièrement.

5. Matériau selon la revendication 1, **caractérisé en ce que** le matériau en polymère de cyclooléfine est préparé par polymérisation de 0,1 à 99,9% en poids, par rapport à la quantité totale de monomères, d'au moins un monomère des formules I, II, III, IV, V ou VI 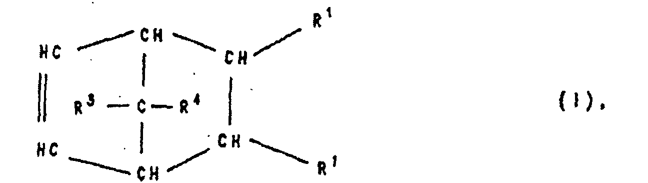 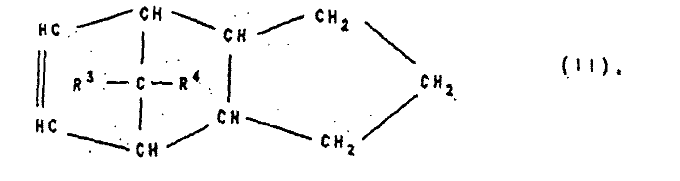 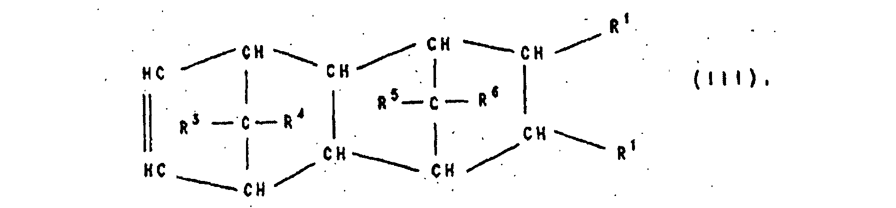 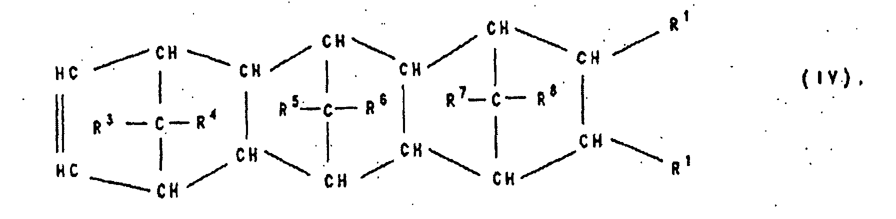 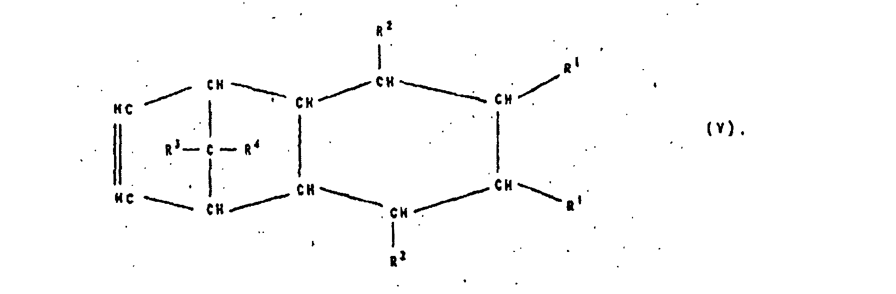 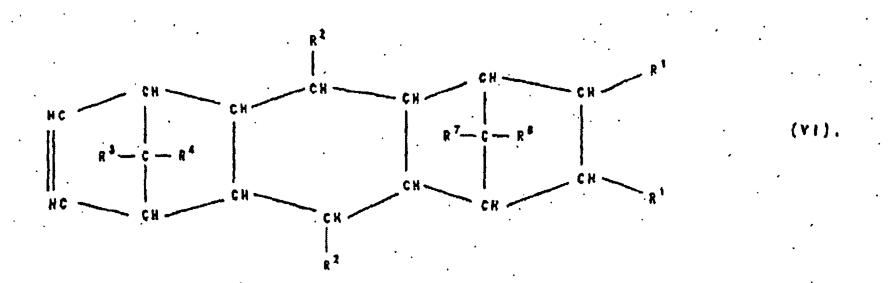 dans lesquelles R¹, R², R³, R⁴, R⁵, R⁶, R⁷ et R⁸ sont identiques ou différents et signifient un atome d'hydrogène, un radical aryle en C₆ à C₁₆ ou un radical alkyle en C₁ à C₈, des radicaux identiques pouvant avoir une signification différente dans les différentes formules,
de 0 à 99,9%, en poids par rapport à la quantité totale de monomères, d'une cyclooléfine de formule VII 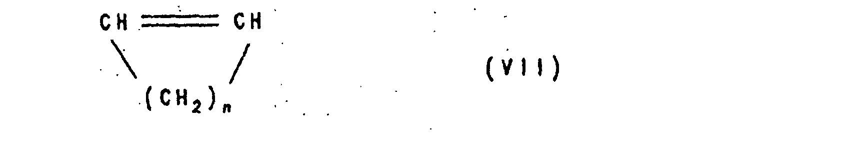 dans laquelle n est un nombre de 2 à 10 et
de 0 à 99,9% en poids, par rapport à la quantité totale de monomères, d'au moins une oléfine acyclique de formule VIII 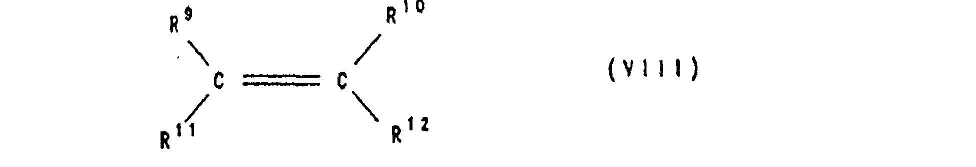 dans laquelle R⁹, R¹⁰, R¹¹ et R¹² sont identiques ou différents et signifient un atome d'hydrogène ou un radical alkyle en C₁ à C₈, à des températures de -78 à 150°C et une pression de 0,01 à 64 bars, en présence d'un catalyseur qui est constitué par un aluminoxane de formule IX 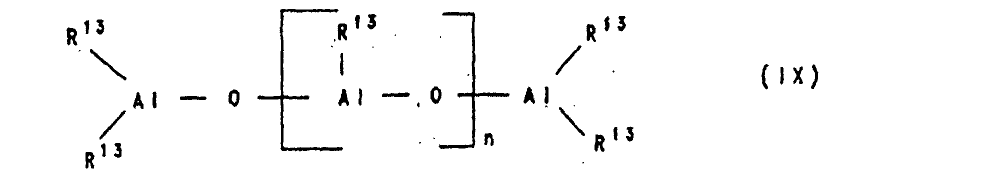 pour le type linéaire et/ou de formule X 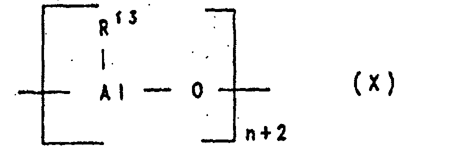 pour le type cyclique, les radicaux R¹³ dans les formules IX et X étant identiques ou différents et signifiant un groupe alkyle en C₁ à C₆ ou phényle ou benzène et n étant un nombre entier de 0 à 50, et par un métallocène de formule XI 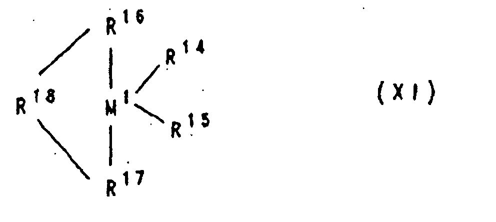 dans laquelle
M¹ représente titane, zirconium, hafnium, vanadium, niobium ou tantale,
R¹⁴ et R¹⁵ sont identiques ou différents et signifient un atome d'hydrogène, un atome d'halogène, un groupe alkyle en C₁ à C₁₀, un groupe alcoxy en C₁ à C₁₀, un groupe aryle en C₆ à C₁₀, un groupe aryloxy en C₆ à C₁₀, un groupe alcényle en C₂ à C₁₀, un groupe arylalkyle en C₇ à C₄₀, un groupe alkylaryle en C₇ à C₄₀ ou un groupe arylalcényle en C₈ à C₄₀,
R¹⁶ et R¹⁷ sont identiques ou différents et signifient un radical hydrocarboné à un ou plusieurs cycles, qui peut former une structure en sandwich avec l'atome central M¹,
R¹⁸ représente 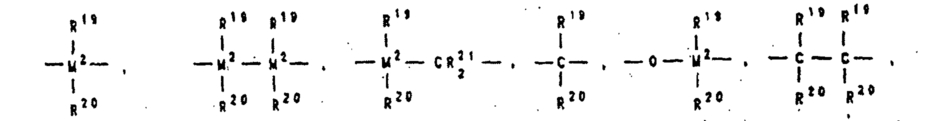 = BR¹⁹, = AlR¹⁹, -Ge-, -Sn-, -O-, -S-, = SO, = SO₂, = NR¹⁹, = CO, = PR¹⁹ ou = P(O)R¹⁹, où R¹⁹, R²⁰ et R²¹ sont identiques ou différents et signifient un atome d'hydrogène, un atome d'halogène, un groupe alkyle en C₁ à C₁₀, un groupe fluoroalkyle en C₁ à C₁₀, un groupe fluoroaryle en C₆ à C₁₀, un groupe aryle en C₆ à C₁₀, un groupe alcoxy en C₁ à C₁₀, un groupe alcényle en C₂ à C₁₀, un groupe arylalkyle en C₇ à C₄₀, un groupe arylalcényle en C₈ à C₄₀ ou un groupe alkylaryle en C₇ à C₄₀, ou R¹⁹ et R²⁰ ou R¹⁹ et R²¹ forment à chaque fois avec les atomes qui les relient un cycle et
M² représente silicium, germanium ou étain, **caractérisé en ce que** la partie de la molécule de métallocène qui est formée par M¹ et les substituants R¹⁶-R¹⁷ présente une symétrie C₁, ou, dans le cas où R¹⁶ et R¹⁷ seraient identiques, se trouve dans la forme méso.

6. Matériau selon la revendication 1 ou 3, **caractérisé en ce que** les fibres de renforcement sont constituées de fibres de verre.

7. Matériau selon la revendication 1, **caractérisé en ce que** les fibres de renforcement sont constituées de carbone, de métal, de céramique ou d'aramide.

8. Matériau selon la revendication 1, **caractérisé en ce que** le copolymère de cyclooléfine utilisé est transparent.

9. Matériau selon la revendication 1, **caractérisé en ce que** le copolymère de cyclooléfine utilisé n'est pas transparent.

10. Matériau selon la revendication 6, **caractérisé en ce que** la proportion de fibres de verre représente 10 à 90% en poids et la proportion de copolymères de cyclooléfine 90 à 10% en poids.

11. Corps moulé en un matériau selon l'une quelconque des revendications 1 à 10.

12. Procédé pour la préparation d'un matériau en polymère de cyclooléfine renforcé par des fibres, dans lequel on mélange une masse fondue du copolymère de cyclooléfine avec des fibres de renforcement en réglant une proportion de 1 à 99% en poids de fibres de renforcement, **caractérisé en ce que** le copolymère de cyclooléfine est constitué par au moins une polycyclooléfine de formule générale I à VI et par au moins une oléfine choisie dans le groupe des monocyclooléfines de formule générale VII et/ou dans le groupe des oléfines acycliques de formule générale VIII, les unités monomères de la polycyclooléfine des formules générales I à VI dans la molécule polymère étant à chaque fois séparées par des unités monomères de l'oléfine cyclique VII et/ou des oléfines acycliques de formule générale VIII.

13. Procédé selon la revendication 12, **caractérisé en ce qu'**on utilise comme fibres de renforcement des fibres de verre présentant un indice de réfraction de 1,50 à 1,56.

14. Procédé selon la revendication 13, **caractérisé en ce qu'**on recouvre les fibres de verre avec un promoteur d'adhérence puis on les rassemble avec la masse fondue du copolymère de cyclooléfine.

15. Procédé selon la revendication 14, **caractérisé en ce qu'**on ajoute un promoteur d'adhérence à la masse fondue de copolymère de cyclooléfine.

16. Procédé selon la revendication 14 ou 15, **caractérisé en ce qu'**on utilise comme promoteur d'adhérence un copolymère de cyclooléfine fonctionnalisé.
